# EUROPÄISCHE PATENTANMELDUNG

(11) **EP 3 656 840 A1**
(43) Veröffentlichungstag der Anmeldung: **27.05.2020**
(21) Anmeldenummer: 19209568.5
(22) Anmeldetag: 15.11.2019
(51) Int. Cl.: C11D 3/386

(54) **MEHRKOMPONENTEN WASCH- ODER REINIGUNGSMITTEL ENTHALTEND EINE CHINON-OXIDOREDUKTASE**

(30) Priorität: 21.11.2018 DE 102018129277
(71) Anmelder: Henkel AG & Co. KGaA, 40589 Düsseldorf (DE)
(72) Erfinder: DEGERING, Christian, 40699 Erkrath (DE); DREJA, Michael, 41469 Neuss (DE); WIELAND, Susanne, 41541 Zons/Dormagen (DE)
(74) Vertreter: Viering, Jentschura & Partner mbB Patent- und Rechtsanwälte

(57) **Zusammenfassung**

Die vorliegende Erfindung betrifft Wasch- oder Reinigungsmittel, welche mindestens ein Enzym (A), wie hierin definiert, NAD(P)H als Cofaktor (B) und optional mindestens ein dazugehöriges Substrat (C), wie hierin definiert, umfassen, wobei die Komponente (A) räumlich getrennt von den Komponenten (B) und (C) vorliegt und/oder das Mittel des Weiteren mindestens eine Substanz (A-I) umfasst, welche als Inhibitor für das Enzym (A) fungiert. Des Weiteren betrifft die Erfindung die Verwendung dieses Mittels zum Waschen von Textilien oder maschinellen Reinigen von Geschirr, sowie ein Verfahren zum Waschen von Textilien oder maschinellen Geschirrspülen unter Verwendung dieses Mittels.

## Beschreibung

Die vorliegende Erfindung betrifft Wasch- oder Reinigungsmittel, welche mindestens ein Enzym (A), wie hierin definiert, NAD(P)H als Cofaktor (B) und optional mindestens ein dazugehöriges Substrat (C), wie hierin definiert, umfassen, wobei die Komponente (A) räumlich getrennt von den Komponenten (B) und (C) vorliegt und/oder das Mittel des Weiteren mindestens eine Substanz (A-I) umfasst, welche als Inhibitor für das Enzym (A) fungiert. Des Weiteren betrifft die Erfindung die Verwendung dieses Mittels zum Waschen von Textilien oder maschinellen Reinigen von Geschirr, sowie ein Verfahren zum Waschen von Textilien oder maschinellen Geschirrspülen unter Verwendung dieses Mittels.

Enzymhaltige Bleiche ist im Stand der Technik bekannt, wird aber derzeit in Wasch- und Reinigungsmittelanwendungen kommerziell kaum genutzt. Während feste Waschmittel mit chemischen Bleichsystemen im Markt weit verbreitet sind, enthalten flüssige Waschmittel nur in seltenen Fällen ein Bleichesystem. Im Bereich von Reinigungsmitteln und der institutionellen Hygiene sind aktuell lediglich Lösungen mit dispergiertem festem Bleichmittel (PAP) kommerziell verfügbar. Alternativ existieren Kartuschensysteme, bei denen zwei Formulierungen separat dosiert werden, meist eine mit Waschmittel und eine mit Bleiche (basierend auf H₂O₂).

Bisherige Bleichen auf Basis von Enzymen und enzymatischen Systemen haben den Nachteil, dass die Leistungsfähigkeit bzw. das Wirkspektrum sehr beschränkt sind. So zeigen Laccasen beispielsweise Vorteile an einzelnen bleichbaren Anschmutzungen. Marktgängige Peroxidasen (DuPont) benötigen eine hohe Menge an Substrat (ca. 4 Moleküle Glucose pro 1 Molekül generiertes H₂O₂), die die Anwendung unwirtschaftlich machen. Es wäre von Vorteil, wenn das Substrat während der Anwendung wiederverwendet oder in einen nutzbaren Wirkstoff überführt werden könnte.

Es besteht daher Bedarf an enzymatischen Bleichsystemen mit breiter Wirksamkeit, hoher (Molekül-)Effizienz und guter Stabilität, die für den Einsatz in flüssigen Wasch- und Reinigungsmitteln geeignet sind.

Es wurde nun gefunden, dass ein enzymatisches System, das eine Chinon-Oxidoreduktase mit dazugehörigem Cofaktor NAD(P)H sowie ein geeignetes Substrat, sowie optional ein weiteres Enzym mit Substrat zur Regeneration des Cofaktors enthält, sowohl eine gute Bleichleistung an verschiedensten Anschmutzungen als auch eine hohe Stabilität in flüssigen Wasch- und Reinigungsmitteln aufweist.

Ein erster Gegenstand der vorliegenden Erfindung ist daher ein Wasch- oder Reinigungsmittel, dadurch gekennzeichnet, dass das Mittel enthält:
(A) mindestens eine Chinon-Oxidoreduktase;
(B) NAD(P)H als Cofaktor; und
(C) optional mindestens ein Substrat für das Enzym (A);
wobei entweder die Komponente (A) räumlich getrennt von den Komponenten (B) und optional (C) vorliegt, oder das Mittel des Weiteren (A-I) mindestens eine Substanz umfasst, welche als Inhibitor für das Enzym (A) fungiert.

In einem weiteren Aspekt betrifft die Erfindung auch die Verwendung solcher mehrphasigen Wasch- oder Reinigungsmittel zum Waschen von Textilien oder maschinellen Reinigen von Geschirr.

Schließlich betrifft die Erfindung auch Verfahren zum Waschen von Textilien oder maschinellen Reinigen von Geschirr, dadurch gekennzeichnet, dass in mindestens einem Verfahrensschritt ein Wasch- oder Reinigungsmittel wie hierin beschrieben angewendet wird.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Unter den Gegenstand der Erfindung fallen alle denkbaren Wasch- oder Reinigungsmittelarten, sowohl Konzentrate als auch unverdünnt anzuwendende Mittel, zum Einsatz im kommerziellen Maßstab, in der Waschmaschine oder bei der Handwäsche beziehungsweise -reinigung. Dazu gehören beispielsweise Waschmittel für Textilien, Teppiche, oder Naturfasern, für die die Bezeichnung Waschmittel verwendet wird. Dazu gehören beispielsweise auch Geschirrspülmittel für Geschirrspülmaschinen oder manuelle Geschirrspülmittel oder Reiniger für harte Oberflächen wie Metall, Glas, Porzellan, Keramik, Kacheln, Stein, lackierte Oberflächen, Kunststoffe, Holz oder Leder, für die die Bezeichnung Reinigungsmittel verwendet wird, also neben manuellen und maschinellen Geschirrspülmitteln beispielsweise auch Scheuermittel, Glasreiniger, WC-Duftspüler, usw. Zu den Wasch- und Reinigungsmitteln im Rahmen der Erfindung zählen ferner Waschhilfsmittel, die bei der manuellen oder maschinellen Textilwäsche zum eigentlichen Waschmittel hinzudosiert werden, um eine weitere Wirkung zu erzielen. Ferner zählen zu Wasch- und Reinigungsmittel im Rahmen der Erfindung auch Textilvor- und Nachbehandlungsmittel, also solche Mittel, mit denen das Wäschestück vor der eigentlichen Wäsche in Kontakt gebracht wird, beispielsweise zum Anlösen hartnäckiger Verschmutzungen, und auch solche Mittel, die in einem der eigentlichen Textilwäsche nachgeschalteten Schritt dem Waschgut weitere wünschenswerte Eigenschaften wie angenehmen Griff, Knitterfreiheit oder geringe statische Aufladung verleihen. Zu letztgenannten Mittel werden u.a. die Weichspüler gerechnet.

"Mindestens ein", wie hierin verwendet, schließt ein, ist aber nicht begrenzt auf 1, 2, 3, 4, 5, 6 und mehr. Bezogen auf einen Inhaltsstoff bezieht sich die Angabe auf die Art des Inhaltsstoffs und nicht auf die absolute Zahl der Moleküle. "Mindestens ein Substrat" bedeutet somit beispielsweise mindestens eine Art von Substrat, d.h. dass eine Art von Substrat oder eine Mischung mehrerer verschiedener Substrate gemeint sein kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Wenn hierin auf Molmassen Bezug genommen wird, beziehen sich diese Angaben immer auf die zahlenmittlere Molmasse Mₙ, sofern nicht explizit anders angeben. Das Zahlenmittel der Molmasse kann beispielsweise mittels Gel-Permeations-Chromatographie (GPC) gemäß DIN 55672-1:2007-08 mit THF als Eluent bestimmt werden. Die massenmittlere Molmasse M_{w} kann ebenfalls mittels GPC bestimmt werden, wie für Mₙ beschrieben.

"Flüssig", wie hierin verwendet, schließt Flüssigkeiten und Gele sowie auch pastöse Zusammensetzungen ein. Es ist bevorzugt, dass die flüssigen Zusammensetzungen bei Raumtemperatur fließfähig und gießbar sind, es ist aber auch möglich, dass sie eine Fließgrenze aufweisen.

Der Ausdruck "räumlich getrennt" in Bezug auf die Zusammensetzungen, wie hierin verwendet, bedeutet, dass die Zusammensetzungen vor der Verwendung nicht miteinander in Kontakt kommen können. Üblicherweise wird das Mittel dazu in einer Mehrkammerverpackung, wie beispielsweise einer Flasche oder einem Pouch, bereitgestellt, insbesondere einer Zweikammerflasche oder einem Zweikammerpouch, wobei sich die jeweilige Zusammensetzung getrennt von der/den anderen Zusammensetzung(en) in einer separaten Kammer befindet.

Gemäß der vorliegenden Erfindung zeichnet sich das im Folgenden detaillierter beschriebene Wasch- oder Reinigungsmittel dadurch aus, dass das Mittel mindestens eine Chinon-Oxidoreduktase (A) enthält. In verschiedenen Ausführungsformen handelt es sich bei dem Enzym (A) um eine Zwei-Elektronen-Oxidureduktase. Insbesondere handelt es sich bei dem Enzym (A) um eine Chinon-Oxidureduktase, welche unter Verbrauch von NADPH (Nicotinamidadenindinukleotidphosphat) oder NADH (Nicotinamidadenindinukleotid) als enzymatischer Cofaktor die Hydrierung von Chinonen zu stabilen Hydrochinon-Intermediaten zu katalysieren vermag. Es gibt jedoch bestimmte Verbindungen, deren Hydrierung nicht zu stabilen Intermediaten führt, sondern stattdessen zu instabilen Hydrochinon-Intermediaten, welche spontan, in Anwesenheit von atmosphärischem Sauerstoff, unter Freisetzung eines Superoxidanionradikals (O₂⁻), wiederum instabile Semichinon-Intermediate bilden, welche dann, unter Freisetzung eines weiteren Superoxidanionradikals (O₂⁻), die Ausgangsverbindung spontan regenerieren. Derartige Verbindungen werden, im Kontext der vorliegenden Erfindung, auch als "Enzym (A) -aktiviertes Substrat" definiert und sind als Substrate bevorzugt. Geeignete Verbindungen werden hierin beschrieben. In wässriger Umgebung disproportionieren Superoxidanionradikale unter Sauerstoffentwicklung und Bildung von Hydroxid sowie Wasserstoffperoxid. Unter Verwendung eines wie hierin beschriebenen Mittels ist es folglich möglich, enzymatisch bereitgestelltes, bleichaktives Wasserstoffperoxid in eine Waschflotte einzubringen.

In verschiedenen Ausführungsformen umfasst das im erfindungsgemäßen Mittel enthaltene Enzym (A) die in SEQ ID NO:1, 2 oder 3 angegebene Aminosäuresequenz oder besteht im Wesentlichen daraus oder besteht daraus. In verschiedenen weiteren Ausführungsformen der Erfindung umfasst die Erfindung auch Mittel umfassend mindestens ein Enzym (A), das von der Aminosäuresequenz gemäß SEQ ID NO:1, 2 oder 3, beispielsweise mittels Mutagenese, abgeleitet ist. In verschiedenen weiteren Ausführungsformen umfasst die Erfindung auch Mittel enthaltend mindestens ein Enzym (A), das durch die Expression einer Nukleotidsequenz, die für ein Protein gemäß SEQ ID NO:1, 2 oder 3 kodiert, erhältlich ist. In verschiedenen Ausführungsformen der Erfindung umfasst das Enzym (A) eine Aminosäuresequenz, die zu der in SEQ ID NO:1, SEQ ID NO:2 oder SEQ ID NO:3 angegebenen Aminosäuresequenz über deren Gesamtlänge zu mindestens 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 98,8%, 99,0%, 99,2%, 99,4% oder 99,6% identisch ist oder aus einer solchen Sequenz besteht.

Die erfindungsgemäßen Mittel enthalten das mindestens eine Enzym (A) in verschiedenen Ausführungsformen in einer Menge von 0,00001 bis 10 Gew.-%, vorzugsweise in einer Menge von 0,0002 bis 0,8 Gew.-%, jeweils bezogen auf das Gesamtgewicht des Mittels. Die vorstehenden Mengenangaben beziehen sich dabei jeweils auf das aktive Protein.

Die Bestimmung der Identität von Nukleinsäure- oder Aminosäuresequenzen erfolgt durch einen Sequenzvergleich. Dieser Sequenzvergleich basiert auf dem im Stand der Technik etablierten und üblicherweise genutzten BLAST-Algorithmus (vgl. beispielsweise Altschul, S.F., Gish, W., Miller, W., Myers, E.W. & Lipman, D.J. (1990) "Basic local alignment search tool." J. Mol. Biol. 215:403-410, und Altschul, Stephan F., Thomas L. Madden, Alejandro A. Schaffer, Jinghui Zhang, Hheng Zhang, Webb Miller, and David J. Lipman (1997): "Gapped BLAST and PSI-BLAST: a new generation of protein database search programs"; Nucleic Acids Res., 25, S.3389-3402) und geschieht prinzipiell dadurch, dass ähnliche Abfolgen von Nukleotiden oder Aminosäuren in den Nukleinsäure- oder Aminosäuresequenzen einander zugeordnet werden. Eine tabellarische Zuordnung der betreffenden Positionen wird als Alignment bezeichnet. Ein weiterer im Stand der Technik verfügbarer Algorithmus ist der FASTA-Algorithmus. Sequenzvergleiche (Alignments), insbesondere multiple Sequenzvergleiche, werden mit Computerprogrammen erstellt. Häufig genutzt werden beispielsweise die Clustal-Serie (vgl. beispielsweise Chenna et al. (2003): Multiple sequence alignment with the Clustal series of programs. Nucleic Acid Research 31, 3497-3500), T-Coffee (vgl. beispielsweise Notredame et al. (2000): T-Coffee: A novel method for multiple sequence alignments. J. Mol. Biol. 302, 205-217) oder Programme, die auf diesen Programmen beziehungsweise Algorithmen basieren. Ferner möglich sind Sequenzvergleiche (Alignments) mit dem Computer-Programm Vector NTI® Suite 10.3 (Invitrogen Corporation, 1600 Faraday Avenue, Carlsbad, Kalifornien, USA) mit den vorgegebenen Standardparametern, dessen AlignX-Modul für die Sequenzvergleiche auf ClustalW basiert.

Solch ein Vergleich erlaubt auch eine Aussage über die Ähnlichkeit der verglichenen Sequenzen zueinander. Sie wird üblicherweise in Prozent Identität, das heißt dem Anteil der identischen Nukleotide oder Aminosäurereste an denselben oder in einem Alignment einander entsprechenden Positionen angegeben. Der weiter gefasste Begriff der Homologie bezieht bei Aminosäuresequenzen konservierte Aminosäure-Austausche in die Betrachtung mit ein, also Aminosäuren mit ähnlicher chemischer Aktivität, da diese innerhalb des Proteins meist ähnliche chemische Aktivitäten ausüben. Daher kann die Ähnlichkeit der verglichenen Sequenzen auch in Prozent Homologie oder Prozent Ähnlichkeit angegeben sein. Identitäts- und/oder Homologieangaben können über ganze Polypeptide oder Gene oder nur über einzelne Bereiche getroffen werden. Homologe oder identische Bereiche von verschiedenen Nukleinsäure- oder Aminosäuresequenzen sind daher durch Übereinstimmungen in den Sequenzen definiert. Solche Bereiche weisen oftmals identische Funktionen auf. Sie können klein sein und nur wenige Nukleotide oder Aminosäuren umfassen. Oftmals üben solche kleinen Bereiche für die Gesamtaktivität des Proteins essentielle Funktionen aus. Es kann daher sinnvoll sein, Sequenz-übereinstimmungen nur auf einzelne, gegebenenfalls kleine Bereiche zu beziehen. Soweit nicht anders angegeben beziehen sich Identitäts- oder Homologieangaben in der vorliegenden Anmeldung aber auf die Gesamtlänge der jeweils angegebenen Nukleinsäure- oder Aminosäuresäuresequenz.

In verschiedenen Ausführungsformen enthält das wie hierin beschriebene Wasch- oder Reinigungsmittel mindestens ein Enzym (A) mit einer Aminosäuresequenz, die zu der in SEQ ID NO:1, SEQ ID NO:2 oder SEQ ID NO:3 angegebenen Aminosäuresequenz über deren Gesamtlänge zu mindestens 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 98,8%, 99,0%, 99,2%, 99,4% oder 99,6% homolog ist.

In einer weiteren Ausführungsform der Erfindung ist das Mittel dadurch gekennzeichnet, dass die katalytische Leistung des mindestens einen Enzyms (A) gegenüber derjenigen eines Enzyms (A), welches eine Aminosäuresequenz umfasst, die der in SEQ ID NO:1, SEQ ID NO:2 oder SEQ ID NO:3 angegebenen Aminosäuresequenzen entspricht, nicht signifikant verringert ist, d.h. mindestens 70%, 75 %, 80 %, 85 %, 90 %, 95 % der Referenz-Leistung besitzt.

In verschiedenen Ausführungsformen der Erfindung ist das Enzym (A) das Enzym NQO1 mit der in SEQ ID NO:1 angegeben Aminosäuresequenz oder eine Variante oder Homolog davon mit den hierin angegebenen Sequenzidentitäten bzw. -homologien. Das Enzym NQO1 (NAD(P)H:quinone oxidoreductase 1) ist ein cytosolisches Flavoenzyme, das auch als DT-diaphorase bekannt ist (EC 1.6.99.2). Das Enzym wird beispielsweise in der US 9,890,397 B1 beschrieben. In verschiedenen anderen Ausführungsformen ist das Enzym (A) das Enzym NAD(P)H Chinon oxidoreductase aus *Pseudomonas aeruginosa* mit der in SEQ ID NO:2 angegebenen Aminosäuresequenz. In noch einer anderen Ausführungsform ist das Enzym (A) das Enzym Chinonreduktase aus *E.coli* K12 mit der in SEQ ID NO:3 angegebenen Aminosäuresequenz.

Weitere in den erfindungsgemäßen Mitteln verwendete Enzyme (A) können im Vergleich zu dem in SEQ ID NO:1, SEQ ID NO:2 oder SEQ ID NO:3 beschriebenen Enzym weitere Aminosäureveränderungen, insbesondere Aminosäure-Substitutionen, -Insertionen oder -Deletionen, aufweisen. Solche Enzyme (A) sind beispielsweise durch gezielte genetische Veränderung, d.h. durch Mutageneseverfahren, weiterentwickelt und für bestimmte Einsatzzwecke oder hinsichtlich spezieller Eigenschaften (beispielsweise hinsichtlich ihrer katalytischen Aktivität, Stabilität, usw.) optimiert.

In verschiedenen Ausführungsformen enthält das erfindungsgemäße Mittel ein Enzym (A) erhältlich durch ein- oder mehrfache konservative Aminosäuresubstitution ausgehend von dem Ausgangsmolekül gemäß SEQ ID NO: 1, SEQ ID NO:2 oder SEQ ID NO:3, wie voranstehend beschrieben. Der Begriff "konservative Aminosäuresubstitution" bedeutet den Austausch (Substitution) eines Aminosäurerestes gegen einen anderen Aminosäurerest, wobei dieser Austausch nicht zu einer Änderung der Polarität oder Ladung an der Position der ausgetauschten Aminosäure führt, z. B. der Austausch eines unpolaren Aminosäurerestes gegen einen anderen unpolaren Aminosäurerest. Konservative Aminosäure-substitutionen im Rahmen der Erfindung umfassen beispielsweise: G=A=S, I=V=L=M, D=E, N=Q, K=R, Y=F, S=T, G=A=I=V=L=M=Y=F=W=P=S=T. Dabei ist die Homologie der derartig modifizierten Enzyme (A) zu dem Ausgangsenzym mit der SEQ ID NO:1, SEQ ID NO:2 oder SEQ ID NO:3 vorzugsweise wie oben definiert.

In verschiedenen weiteren Ausführungsformen ist das Mittel dadurch gekennzeichnet, dass das mindestens eine Enzym (A) aus einem wie oben definierten Enzym (A) als Ausgangsmolekül erhältlich ist durch Fragmentierung, Deletions-, Insertions- oder Substitutionsmutagenese und eine Aminosäuresequenz umfasst, die über eine Länge von mindestens 150, 155, 160, 165, 170, 175, 180, 185, 186, 187, 190, 200, 210, 215, 220, 225, 230, 231, 232, 233, 240, 245, 250, 260, 261, 262, 263, 264, 265, 266, 267, 268, 269, 270, 271, 272, 273, oder 274 zusammenhängenden Aminosäuren mit dem Ausgangsmolekül übereinstimmt.

So ist es beispielsweise möglich, an den Termini oder in den Loops des Enzyms einzelne Aminosäuren zu deletieren, ohne dass dadurch die katalytische Aktivität verloren oder vermindert wird. Ferner kann durch derartige Fragmentierung, Deletions-, Insertions- oder Substitutionsmutagenese beispielsweise auch die Allergenizität betreffender Enzyme gesenkt und somit insgesamt ihre Einsetzbarkeit verbessert werden. Vorteilhafterweise behalten die Enzyme auch nach der Mutagenese ihre katalytische Aktivität, d.h. ihre katalytische Aktivität entspricht mindestens derjenigen des Ausgangsenzyms, d.h. in einer bevorzugten Ausführungsform beträgt die katalytische Aktivität mindestens 80, vorzugsweise mindestens 90 % der Aktivität des Ausgangsenzyms. Auch weitere Substitutionen können vorteilhafte Wirkungen zeigen. Sowohl einzelne wie auch mehrere zusammenhängende Aminosäuren können gegen andere Aminosäuren ausgetauscht werden.

In verschiedenen Ausführungsformen kann das erfindungsgemäße Mittel mindestens ein Enzym (A) umfassen, welches zusätzlich zu der in SEQ ID NO:1, SEQ ID NO:2 oder SEQ ID NO:3 angegebenen Sequenz N- oder C-terminal eine oder mehrere weitere Aminosäuren aufweisen. In bestimmten Ausführungsformen kann es sich bei solchen N-terminalen Peptiden beispielsweise um einen einzelnen Methionin-Rest handeln.

Bei dem Enzym (A) handelt es sich jedoch vorzugsweise um ein reifes (matures) Enzym (A), d.h. um das katalytisch aktive Molekül ohne Signal- und/oder Propeptid(e).

In verschiedenen Ausführungsformen liegt das Enzym (A) in den erfindungsgemäßen Wasch- oder Reinigungsmitteln in Form einer enzymhaltigen Zusammensetzung A vor.

In verschiedenen Ausführungsformen enthält eine solche enzymhaltige Zusammensetzung A mindestens ein organisches Lösungsmittel, vorzugsweise ausgewählt aus Alkoholen, besonders bevorzugt mehrwertigen bei Standardbedingungen (20°C, 1013 mbar) flüssigen mehrwertigen Alkoholen, insbesondere Glycerin, 1,2-Propandiol und Sorbitol, sowie Mischungen davon. Wenn diese enthalten sind, beträgt die Menge vorzugsweise von 0,1 bis 99,9 Gew.-%, weiter bevorzugt 10 bis 90 Gew.-%, bezogen auf das Gesamtgewicht der enzymhaltigen Zusammensetzung.

In verschiedenen Ausführungsformen der Erfindung handelt es sich bei dem Enzym (A) um ein frei vorliegendes Enzym. Dies bedeutet, dass das Enzym (A) mit allen Komponenten eines Mittels direkt agieren kann und, da es sich bei der enzymhaltigen Zusammensetzung A erfindungsgemäß um ein Flüssigmittel handelt, dass das Enzym (A) direkt mit dem Lösungsmittel des Mittels (z.B. Wasser) in Kontakt steht.

In anderen Ausführungsformen kann ein Mittel mindestens ein Enzym (A) enthalten, das einen Interaktionskomplex mit anderen Molekülen bildet oder das eine "Umhüllung" aufweist. Hierbei kann ein einzelnes oder mehrere Enzym (A) Moleküle durch eine sie umgebende Struktur von den anderen Bestandteilen des Mittels getrennt sein. Eine solche trennende Struktur kann entstehen durch, ist allerdings nicht beschränkt auf, Vesikel, wie etwa eine Micelle oder ein Liposom, oder Mikro-/Nanokapseln, typischerweise mit einer Polymerhülle.

Eine enzymhaltige Zusammensetzung A, wie vorangehend beschrieben, enthält das mindestens eine Enzym (A) vorzugsweise in einer Menge Aktivprotein von 0,1 bis 50 Gew.-%, vorzugsweise 0,1 bis 20 Gew.-%, bezogen auf das Gesamtgewicht der Zusammensetzung.

Die erfindungsgemäßen Wasch- oder Reinigungsmittel enthalten das Enzym (A) in verschiedenen Ausführungsformen insgesamt in einer Menge von 0,00001 bis 10 Gew.-%, vorzugsweise in einer Menge von 0,0002 bis 0,8 Gew.-%, jeweils bezogen auf das Gesamtgewicht des Mittels. Die vorstehenden Mengenangaben beziehen sich dabei jeweils auf das aktive Protein.

Die Proteinkonzentration kann generell mit Hilfe bekannter Methoden, zum Beispiel dem BCA-Verfahren (Bicinchoninsäure; 2,2'-Bichinolyl-4,4'-dicarbonsäure) oder dem Biuret-Verfahren (A. G. Gornall, C. S. Bardawill und M.M. David, J. Biol. Chem., 177 (1948), S. 751-766) bestimmt werden. Die Bestimmung der Aktivproteinkonzentration kann diesbezüglich über eine Titration der aktiven Zentren unter Verwendung eines geeigneten irreversiblen Inhibitors und Bestimmung der Restaktivität (vgl. M. Bender et al., J. Am. Chem. Soc. 88, 24 (1966), S. 5890-5913) erfolgen.

In verschiedenen Ausführungsformen enthält die enzymhaltige Zusammensetzung A enthaltend das mindestens eine Enzym (A) weiterhin mindestens ein Tensid, vorzugsweise einen alkoxylierten Alkohol, weiter bevorzugt ein Fettalkoholethoxylat, vorzugsweise in einer Menge von 0,01 bis 10, besonders bevorzugt 0,01 bis 5 Gew.-%, bezogen auf das Gesamtgewicht der Zusammensetzung.

Die Zusammensetzung A kann weiterhin mindestens einen Enzymstabilisator und/oder Enzyminhibitor enthalten, vorzugsweise in einer Menge von 0,001 bis 50 Gew.-%, weiter bevorzugt 0,01 bis 10 Gew.-%, bezogen auf das Gesamtgewicht der enzymhaltigen Zusammensetzung. Als Stabilisatoren/Inhibitoren kommen alle im Stand der Technik für diesen Zweck bekannten Verbindungen in Frage. In verschiedenen Ausführungsformen enthält die Zusammensetzung A insbesondere eine Substanz (A-I), welche als Inhibitor, insbesondere als kompetitiver Inhibitor, für das Enzym (A) fungiert. Geeignete Substanzen können abhängig von dem Enzym (A) ausgewählt werden und werden beispielhaft hierin beschrieben.

In verschiedenen bevorzugten Ausführungsformen enthält die Zusammensetzung A neben dem mindestens einen Enzym (A) keine weiteren Enzyme.

Es ist generell bevorzugt, dass die Zusammensetzung A das mindestens eine Enzym (A) und ggf. weitere Bestandteile in Mengen enthält, die typischerweise in Enzymformulierungen als solchen, aber nicht in enzymhaltigen Wasch- und Reinigungsmitteln eingesetzt werden. Der Aktivproteingehalt kann daher beispielsweise im Bereich von 0,1 bis 20 Gew.-% liegen, vorzugsweise im Bereich von 1 bis 15 Gew.-%. Die Menge an Stabilisator ist dann an die Enzymmenge angepasst und kann ebenfalls im Bereich von 0,01 bis 15 Gew.-% liegen.

In verschiedenen Ausführungsformen kann die enzymhaltige Zusammensetzung A Wasser als Lösungsmittel enthalten, aber auch wasserarme bis wasserfreie Zusammensetzungen sind möglich. In letzteren werden dann insbesondere die oben genannten organischen Lösungsmittel eingesetzt.

"Wasserarm" bezieht sich auf Wassergehalte von bis zu 20 Gew.-%, vorzugsweise bis 15 Gew.-%, noch bevorzugter bis 10 Gew.-%, und "wasserfrei" bezieht sich auf Wassergehalte bis 5 Gew.-%, insbesondere Zusammensetzungen in denen Wasser nicht absichtlich zugesetzt wird, sondern maximal mit anderen Bestandteilen eingeschleppt wird. Der Wassergehalt kann mittels Karl-Fischer-Titration bestimmt werden. Wenn die Mittel der Erfindung teilweise wasserarm bis wasserfrei sind, bezieht sich der angegebene pH-Wert in verschiedenen Ausführungsformen auf eine 1% Lösung der jeweiligen Zusammensetzung in destilliertem Wasser bei 25°C.

In verschiedenen Ausführungsformen liegt der pH-Wert der enzymhaltigen Zusammensetzung im Bereich von 5 bis 9.
In bevorzugten Ausführungsformen ist die enzymhaltige Zusammensetzung A flüssig oder gelförmig.

Erfindungsgemäß wird das mindestens eine Enzym (A) in den hierin beschriebenen Mitteln eingesetzt, um unter geeigneten Bedingungen, d.h. in Anwesenheit von Sauerstoff, bspw. atmosphärischem Sauerstoff, die Hydrierung von Substraten (C) zu katalysieren, insbesondere Enzym (A)-aktivierten Substraten, wodurch, wie vorangehend beschrieben, in wässriger Umgebung, beispielweise in einer Waschflotte, Wasserstoffperoxid entstehen kann.

"Substrate", wie hierin in Bezug auf die beschriebenen Enzyme verwendet, bezeichnet Verbindungen, die von den genannten Enzymen katalytisch umgesetzt werden können. Die Umwandlungsrate ist dabei vorzugsweise ausreichend hoch, um eine für den Erfindungszweck ausreichende Konversion zu bewirken. In verschiedenen Ausführungsformen entspricht die Umsetzungsrate mindestens 10 %, vorzugsweise mindestens 25% oder mehr der Umsetzungsrate des Enzyms für sein natürliches Substrat.

Geeignete Substrate, wie voranstehend definiert, schließen dabei ein, sind aber nicht beschränkt auf, Chinone im allgemeinen, sowie insbesondere β-Lapachon (2,2-Dimethyl-3,4-dihydro-2H-benzo[h]chromen-5,6-dion), Streptonigrin, Deoxynybochinon, Isobutyldeoxynybochinon, Mitomycin C, KP372-1 (6H-indeno[1,2-ε]tetrazolo[1,5-b][1,2,4]triazin-6-on und 10H-indeno[2,1-ε]tetrazolo[1,5-b][1,2,4]triazin-10-on (1:1)), Phenothiazinium-Verbindungen, 2,5-Diaziridinyl-3-(hydroxymethyl)-6-methyl-1,4-benzochinon (RH1), Apazichinon (EO9), Indolchinone, Pronoqodin A, Chinolinchinone, Binaphthylchinone, Anthrachinon, Plastochinon, Pyrrolochinolinchinon, Carbazilchinon, Chloranil, Dibromthymochinon, Plastochinon, Ubichinon, Indolchinone, Porfiromycin, Pyrroliminochinone, Atovaquon, Vitamin K, Vitamin K1, Vitamin K2 und Vitamin K3. Weiterhin ist es möglich, dass derartige Substrate auch aus Schmutz oder Flecken auf dem zu waschenden oder reinigenden Wasch-/Spülgut stammen, welche im Wasch- oder Reinigungsprozess gebleicht und entfernt werden sollen. In verschiedenen Ausführungen kann das Substrat (C) daher in dem erfindungsgemäßen Mittel enthalten sein oder, alternativ, nicht enthalten sein und dann aus den zu bleichenden Anschmutzungen stammen. In verschiedenen Ausführungsformen ist auch beides möglich. Es ist allerdings bevorzugt, dass die erfindungsgemäßen Mittel mindestens ein geeignetes Substrat (C) enthalten.

In verschiedenen solchen Ausführungsformen ist das mindestens eine Substrat (C) ausgewählt aus Chinonen, insbesondere β-Lapachon, Streptonigrin, Deoxynybochinon, Isobutyldeoxynybochinon, Mitomycin C, KP372-1, Phenothiazinium-Verbindungen, 2,5-Diaziridinyl-3-(hydroxymethyl)-6-methyl-1,4-benzochinon (RH1), Apazichinon (EO9), Indolchinonen, Pronoqodin A, Chinolinchinonen und Binaphtylchinonen.

In bevorzugten Ausführungsformen handelt es sich bei dem mindestens einen Substrat (C) um β-Lapachon.

In verschiedenen Ausführungsformen ist das mindestens eine Substrat (C), wie hierin definiert, in einer Menge von 0,2 bis 25 Gew.-%, vorzugsweise in einer Menge von 1 bis 6 Gew.-%, jeweils bezogen auf das Gesamtgewicht des Mittels, in dem erfindungsgemäßen Mittel enthalten.

Zur Umsetzung (Hydrierung) des Substrats (C) benötigt das Enzym (A) als Cofaktor NADPH (Nicotinamid-Adenin-Dinukleotidphosphat) oder NADH (Nicotinamid-Adenin-Dinukleotid) wie voranstehend erläutert. Diese werden hierin mit dem Begriff NAD(P)H zusammengefasst. In verschiedenen Ausführungsformen enthält das erfindungsgemäße Mittel diese Komponente (B) in einer Menge von 0,001 bis 2 Gew.-%, vorzugsweise in einer Menge von 0,1 bis 0,5 Gew.-%, jeweils bezogen auf das Gesamtgewicht des Mittels.

Damit die durch das Enzym (A) zu katalysierende Reaktion nicht bereits im Wasch- oder Reinigungsmittel, sondern erst im Zuge des Wasch- oder Reinigungsvorgangs stattfinden kann, muss entweder mindestens eine als Enzyminhibitor für das Enzym (A) fungierende Substanz (A-I) in dem erfindungsgemäßen Mittel enthalten sein, oder die Komponente (A) muss räumlich getrennt, wie voranstehend definiert, von den Komponenten (B) und (C) in dem erfindungsgemäßen Mittel vorliegen. In verschiedenen Ausführungsformen ist, trotz räumlicher Trennung der Komponente (A) von den Komponenten (B) und (C), zusätzlich mindestens eine Substanz (A-I) in dem erfindungsgemäßen Mittel enthalten. Generell ist die Substanz (A-I), wenn vorhanden, zusammen mit dem Enzym (A) formuliert, d.h. sie ist beispielsweise in einer enzymhaltigen Zusammensetzung A enthalten.

In verschiedenen Ausführungsformen handelt es sich bei der Komponente (A-I) um einen kompetitiven Inhibitor für das Enzym (A). In verschiedenen Ausführungsformen handelt es sich bei der Komponente (A-I) um eine Substanz aus der Klasse der 4-Hydroxycumarine. Derartige Verbindungen werden beispielsweise in Ferry et al. 2010 ("Old and new inhibitors of quinone reductase 2", Chemico-Biological Interaction, Volume 186) beschrieben und umfassen, ohne darauf beschränkt zu sein, Dicoumarol, Melatonin, Resveratrol und Chrysoeriol.

In verschiedenen Ausführungsformen ist die Komponente (A-I), d.h. die mindestens eine Substanz (A-I), in einer Menge von 0,00001 bis 10 Gew.-%, vorzugsweise in einer Menge von 0,0002 bis 0,8 Gew.-%, jeweils bezogen auf das Gesamtgewicht des Mittels, in dem erfindungsgemäßen Mittel enthalten.

In verschiedenen Ausführungsformen liegt das erfindungsgemäße Wasch- oder Reinigungsmittel in Form eines Mehrkammersystems, beispielsweise eines Mehrkammerpouches, vor und die Komponente (A) befindet sich in einer anderen Kammer des Mehrkammersystems als die Komponenten (B) und (C). Ein erfindungsgemäßes Mehrkammersystem, wie z.B. ein Pouch, umfasst mindestens zwei, d.h. zwei oder mehr Kammern, beispielsweise zwei, drei, oder vier Kammern. In beispielhaften Ausführungsformen liegt die Komponente (A) in Form einer enzymhaltigen Zusammensetzung A vor, wie hierin definiert, während die Komponenten (B) und (C) in einer Zusammensetzung B enthalten sind, wobei die Zusammensetzung A und die Zusammensetzung B in unterschiedlichen Kammern des Mehrkammersystems enthalten sind.

Gemäß der vorliegenden Erfindung sind vorzugsweise sowohl Zusammensetzungen enthaltend die Komponente (A) als auch Zusammensetzungen enthaltend die Komponenten (B) und (C) flüssig.

Wirtschaftlich betrachtet ist es vorteilhaft, wenn der Cofaktor, welcher mit Ablauf der durch das Enzym (A) katalysierten Reaktion, wie voranstehend erläutert, oxidiert, d.h. verbraucht wird, regeneriert wird. In verschiedenen Ausführungsformen umfasst das erfindungsgemäße Mittel daher des Weiteren mindestens ein Enzym (D) welches zur Regeneration des Cofaktors (B) geeignet ist, sowie mindestens ein Substrat (E) für das entsprechende Enzym (D).

In verschiedenen Ausführungsformen handelt es sich bei dem mindestens einen Enzym (D) um eine Enzym, das NADH bzw. NADPH regenerieren kann. Ein geeignetes Enzym ist, ohne darauf beschränkt zu sein, eine Glucosedehydrogenase, welche D-Glucose unter Regeneration von NADH bzw. NADPH (NAD(P)H), d.h. unter Reduktion von NAD(P)⁺, zu D-Glucono-1,5-lacton umsetzt. Entsprechend handelt es sich, gemäß diesen Ausführungsformen, bei dem mindestens einen Substrat (E) beispielsweise um D-Glucose.

In verschiedenen anderen Ausführungsformen handelt es sich bei dem mindestens einen Enzym (D) um eine Glucose-6-phosphat-Dehydrogenase, welche Glucose-6-phosphat unter Regeneration von NADPH zu 6-Phosphogluconolacton umsetzt. Entsprechend handelt es sich, gemäß diesen Ausführungsformen, bei dem mindestens einen Substrat (E) beispielsweise um Glucose-6-phosphat.

In wieder anderen Ausführungsformen handelt es sich bei dem mindestens einen Enzym (D) um eine Alkohol-Dehydrogenase, welche primäre und sekundäre Alkohole unter Regeneration von NAD(P)H zu den entsprechenden Aldehyden beziehungsweise Ketonen umsetzt. Entsprechend handelt es sich, gemäß diesen Ausführungsformen, bei dem mindestens einen Substrat (E) beispielsweise um einen primären oder sekundären Alkohol, beispielsweise Ethanol.

Alternativ können auch andere NAD(P)H regenerierende Enzyme (D) und entsprechende Substrate (E) erfindungsgemäß eingesetzt werden. Entsprechende Systeme sind generell in *"*Regeneration of Nicotinamide Coenzymes: Principles and Applications for the Synthesis of Chiral Compounds", Weckbecker et al., 2010, beschrieben.

In verschiedenen Ausführungsformen ist die Komponente (D) in einer Menge von 0,00001 bis 10 Gew.-%, vorzugsweise in einer Menge von 0,0002 bis 0,8 Gew.-%, jeweils bezogen auf das Gesamtgewicht des Mittels, in dem erfindungsgemäßen Mittel enthalten.

In weiteren Ausführungsformen ist die Komponente (E) in einer Menge von 0,2 bis 25 Gew.-%, vorzugsweise in einer Menge von 1 bis 10 Gew.-%, jeweils bezogen auf das Gesamtgewicht des Mittels, in dem erfindungsgemäßen Mittel enthalten.

In verschiedenen Ausführungsformen sind die Komponente (D) und die Komponente (E) räumlich getrennt voneinander in dem erfindungsgemäßen Mittel enthalten. Beispielsweise kann, in erfindungsgemäßen Mitteln, die Komponente (D) in der Zusammensetzung B, umfassend die Komponenten (B) und (C), enthalten sein, während die Komponente (E) in der Zusammensetzung A, umfassend das Enzym (A), enthalten ist. Alternativ kann das erfindungsgemäße Mittel, zusätzlich zu den Zusammensetzungen A und B, weitere Zusammensetzungen umfassen. Dementsprechend ist es beispielhaft möglich, die Komponente (D) in einer zusätzlichen, enzymhaltigen Zusammensetzung C zu formulieren, während die Komponente (E) wiederum entweder in der enzymhaltigen Zusammensetzung A, der Zusammensetzung B oder aber einer weiteren Zusammensetzung D formuliert vorliegt.

Die Komponente (D) kann somit ebenfalls in Form einer enzymhaltigen Zusammensetzung C in dem erfindungsgemäßen Mittel vorliegen, wie bereits für die Komponente (A) beschrieben. Anders als die Komponente (A) kann die Komponente (D) jedoch, in verschiedenen Ausführungsformen, in Form einer enzymhaltigen Zusammensetzung C formuliert vorliegen, welche neben dem mindestens einen Enzym (D) ein oder mehrere weitere, in Wasch- oder Reinigungsmitteln üblicherweise einsetzbare Enzyme umfasst. In diesem Zusammenhang beispielhaft und ohne Einschränkung seien Proteasen, Amylasen, Lipasen, Cellulasen, Mannanasen, Hemicellulasen, Perhydrolasen, weitere Oxidoreduktasen und Kombinationen von mehreren davon genannt.

Wie bereits voranstehend in Bezug auf eine enzymhaltige Zusammensetzung A enthaltend die Komponente (A) erläutert, kann die Komponente (D) auch weitere in dem erfindungsgemäßen Mittel enthaltene Enzyme jeweils unabhängig voneinander in freier Form oder aber in einer Umhüllung vorliegend in dem erfindungsgemäßen Mittel enthalten sein.

In verschiedenen Ausführungsformen liegt das erfindungsgemäße Mittel in Form eines Mehrkammersystems, wie zum Beispiel einem Mehrkammerpouch, vor und die Komponente (D) und die Komponente (E) sind in unterschiedlichen Kammern des Mehrkammersystems vorhanden.

Die hierin beschriebenen Wasch- und Reinigungsmittel sind vorzugsweise flüssiger Natur und können insbesondere als homogene Lösungen oder Suspensionen vorliegen. In verschiedenen Ausführungsformen, welche eine Zusammensetzung A, eine Zusammensetzung B und ggf. weitere Zusammensetzungen C und/oder D umfassen, können alternativ auch nur die entsprechenden Zusammensetzungen A, B, C und/oder D in flüssiger Form vorliegen, während gegebenenfalls vorhandene weitere Zusammensetzungen in fester Form vorliegen können. "Fest" bedeutet in diesem Kontext, dass die Zusammensetzung bei Standardbedingungen als Feststoff, insbesondere als Pulver oder Granulat oder Kompaktat vorliegt.

In einer weiteren bevorzugten Ausführungsform der Erfindung liegt das Wasch- oder Reinigungsmittel, in einer vorportionierten Form vor. Das Wasch- oder Reinigungsmittel weist mehrere räumlich voneinander getrennte Zusammensetzungen auf, wodurch es zum einen möglich ist, nicht kompatible Inhaltsstoffe voneinander zu trennen, wie voranstehend beschrieben, und zum anderen möglich ist, Zusammensetzungen in Kombination anzubieten, welche zu unterschiedlichen Zeitpunkten zum Einsatz kommen.

Abhängig von dem gewünschten Einsatzzweck enthalten die erfindungsgemäßen Mittel in verschiedenen Ausführungsformen weiterhin mindestens einen weiteren Bestandteil, vorzugsweise mindestens zwei weitere Bestandteile, ausgewählt aus der Gruppe bestehend aus Gerüststoffen, Tensiden, Polymeren, wassermischbaren Lösemitteln, pH-Regulatoren, weiteren Enzymen, weiteren Enzymstabilisatoren/-Inhibitoren, Bleichmitteln, Bleichkatalysatoren, Bleichaktivatoren, Schaumregulatoren, Farbstoffen, Duftstoffen und Parfümträgern. Entsprechend den voranstehenden Vorgaben können derartige weitere Bestandteile in erfindungsgemäßen Mitteln in den jeweiligen Zusammensetzungen A, B und ggf. C und/oder D formuliert vorliegen, oder in zusätzlichen Zusammensetzungen, enthaltend keine der vorstehend definierten Komponenten (A), (B), (C), (D), (E) und (A-I), enthalten sein.

Entsprechend können die erfindungsgemäßen Wasch- oder Reinigungsmittel mindestens einen Builder (Gerüststoff) enthalten. Zu den einsetzbaren Gerüststoffen zählen insbesondere Carbonate, Citrate, Phosphonate, organische Gerüststoffe und Silikate. Der Gewichtsanteil der gesamten Gerüststoffe am Gesamtgewicht erfindungsgemäßer Mittel beträgt beispielsweise 5 bis 35 Gew.-%, noch bevorzugter 8 bis 25 Gew.-%.

Erfindungsgemäß geeignete organische Gerüststoffe sind beispielsweise die in Form ihrer Natriumsalze einsetzbaren Polycarbonsäuren (Polycarboxylate), wobei unter Polycarbonsäuren solche Carbonsäuren verstanden werden, die mehr als eine, insbesondere zwei bis acht Säurefunktionen, bevorzugt zwei bis sechs, insbesondere zwei, drei, vier oder fünf Säurefunktionen im gesamten Molekül tragen. Bevorzugt sind als Polycarbonsäuren somit Dicarbonsäuren, Tricarbonsäuren Tetracarbonsäuren und Pentacarbonsäuren, insbesondere Di-, Tri- und Tetracarbonsäuren. Dabei können die Polycarbonsäuren noch weitere funktionelle Gruppen, wie beispielsweise Hydroxyl- oder Aminogruppen, tragen. Beispielsweise sind dies Citronensäure, Adipinsäure, Bernsteinsäure, Glutarsäure, Äpfelsäure, Weinsäure, Maleinsäure, Fumarsäure, Zuckersäuren (bevorzugt Aldarsäuren, beispielsweise Galactarsäure und Glucarsäure), Aminocarbonsäuren, insbesondere Aminodicarbonsäuren, Aminotricarbonsäuren, Aminotetracarbonsäuren, wie beispielsweise Nitrilotriessigsäure (NTA), Methylglycindiessigsäure (MGDA), Glutamin-N,N-diessigsäure (auch als N,N-Bis(carboxymethyl)-L-glutaminsäure oder GLDA bezeichnet), Asparaginsäurediacetat (ASDA), Hydroxyethyliminodiacetat (HEIDA), Iminodisuccinat (IDS) und Ethylendiamindisuccinat (EDDS), und deren Derivate sowie Mischungen von diesen. Bevorzugte Salze sind die Salze der Polycarbonsäuren wie Citronensäure, Adipinsäure, Bernsteinsäure, Glutarsäure, Weinsäure, MGDA und Mischungen aus diesen.

Weiterhin geeignet als organische Gerüststoffe sind polymere Polycarboxylate (organische Polymere mit einer Vielzahl, an (insbesondere größer zehn) Carboxylatfunktionen im Makromolekül), Polyaspartate, Polyacetale und Dextrine.

Die freien Säuren besitzen neben ihrer Builderwirkung typischerweise auch die Eigenschaft einer Säuerungskomponente und können somit auch zur Einstellung des pH-Werts dienen. Insbesondere sind hierbei Citronensäure, Bernsteinsäure, Glutarsäure, Adipinsäure, Gluconsäure und beliebige Mischungen aus diesen zu nennen.

Erfindungsgemäße Mittel können als Gerüststoff weiterhin kristalline schichtförmige Silikate der allgemeinen Formel NaMSiₓO₂ₓ₊₁ · y H₂O, worin M Natrium oder Wasserstoff darstellt, x eine Zahl von 1,9 bis 22, vorzugsweise von 1,9 bis 4, wobei besonders bevorzugte Werte für x 2, 3 oder 4 sind, und y für eine Zahl von 0 bis 33, vorzugsweise von 0 bis 20 steht. Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen. In bevorzugten erfindungsgemäßen Reinigungsmitteln, insbesondere Geschirrspülmitteln, bevorzugt maschinellen Geschirrspülmitteln, wird der Gehalt an Silikaten, bezogen auf das Gesamtgewicht des Reinigungsmittels, auf Mengen unterhalb 10 Gew.-%, vorzugsweise unterhalb 5 Gew.-% und insbesondere unterhalb 2 Gew.-% begrenzt. Es ist besonders bevorzugt, dass die Mittel frei von Silikaten sind, wobei "frei" in diesem Zusammenhang bedeutet, dass die Menge auf weniger als 0,1 Gew.-% begrenzt ist.

In verschiedenen Ausführungsformen enthalten erfindungsgemäße Mittel als einen ihrer wesentlichen Gerüststoffe ein oder mehrere Salze der Citronensäure, also Citrate.

Bevorzugt ist ebenfalls der Einsatz von Carbonat(en) und/oder Hydrogencarbonat(en), vorzugsweise Alkalicarbonat(en), besonders bevorzugt Natriumcarbonat (Soda).

In Ergänzung zu den vorgenannten Gerüststoffen können die erfindungsgemäßen Wasch- oder Reinigungsmittel weiterhin Alkalimetallhydroxide als Alkaliquelle enthalten. Diese Alkaliträger werden in den Mitteln bevorzugt nur in geringen Mengen, vorzugsweise in Mengen unterhalb 10 Gew.-%, bevorzugt unterhalb 6 Gew.-%, vorzugsweise unterhalb 5 Gew.-%, besonders bevorzugt zwischen 0,1 und 5 Gew.-% und insbesondere zwischen 0,5 und 5 Gew.-%, jeweils bezogen auf das Gesamtgewicht des Mittels eingesetzt. Es ist allerdings bevorzugt, dass die Mittel nur geringe Mengen an NaOH enthalten, vorzugsweise sind sie frei von NaOH. In verschiedenen Ausführungsformen enthält das erfindungsgemäße Mittel anstelle von NaOH Kaliumhydroxid (KOH) als Alkaliquelle, vorzugsweise in den oben angegeben Mengen, insbesondere bis 3,5 Gew.-%. Insbesondere werden die Alkalimetallhydroxide, vor allem KOH, in solchen Mengen eingesetzt, dass die gewünschten pH-Werte der Zusammensetzungen erreicht werden.

Als Tenside kommen alle bekannten nichtionischen, anionischen, kationischen, zwitterionischen und amphoteren Tenside in Betracht, wobei in verschiedenen Ausführungsformen zumindest nichtionische und/oder anionische Tenside eingesetzt werden.

Als nichtionische Tenside können alle dem Fachmann bekannten nichtionischen Tenside eingesetzt werden. Bevorzugt einzusetzende nichtionische Tenside stammen aus den Gruppen der alkoxylierten Niotenside, insbesondere der ethoxylierten primären Alkohole, sowie auch Mischungen dieser Tenside mit strukturell komplizierter aufgebauten Tensiden wie Polyoxypropylen/Polyoxyethylen/Polyoxypropylen ((PO/EO/PO)-Tenside).

Die erfindungsgemäßen Mittel, insbesondere Geschirrspülmittel, können ferner mindestens ein Sulfopolymer enthalten. Der Gewichtsanteil des Sulfopolymers am Gesamtgewicht der dieses enthaltenden Zusammensetzung, vorzugsweise B oder C, beträgt vorzugsweise von 0,1 bis 20 Gew.-%, insbesondere von 0,5 bis 15 Gew.-%, besonders bevorzugt 1,0 bis 10 Gew.-%, insbesondere von 2 bis 8 Gew.-%, vor allem von 3 bis 6 Gew.-%. Ganz besonders bevorzugt sind Zusammensetzungen, die bis zu 6 Gew.-% Sulfopolymer enthalten. Das Sulfopolymer wird üblicherweise in Form einer wässrigen Lösung eingesetzt, wobei die wässrigen Lösungen typischerweise 20 bis 70 Gew.-%, insbesondere 30 bis 50 Gew.-%, vorzugsweise etwa 35 bis 40 Gew.-% Sulfopolymere enthalten.

Als Sulfopolymer wird vorzugsweise ein copolymeres Polysulfonat, vorzugsweise ein hydrophob modifiziertes copolymeres Polysulfonat, eingesetzt.

Bevorzugte anionische Tenside sind Fettalkoholsulfate, Fettalkoholethersulfate, Dialkylethersulfate, Monoglyceridsulfate, Alkylbenzolsulfonate, Olefinsulfonate, Alkansulfonate, Ethersulfonate, n-Alkylethersulfonate, Estersulfonate und Ligninsulfonate. Ebenfalls im Rahmen der vorliegenden Erfindung verwendbar sind Fettsäurecyanamide, Sulfosuccinate (Sulfobernsteinsäureester), insbesondere Sulfobernsteinsäuremono- und -di-C₈-C₁₈-Alkylester, Sulfosuccinamate, Sulfosuccinamide, Fettsäureisethionate, Acylaminoalkansulfonate (Fettsäuretauride), Fettsäuresarcosinate, Ethercarbonsäuren und Alkyl(ether)phosphate sowie α-Sulfofettsäuresalze, Acylglutamate, Monoglyceriddisulfate und Alkylether des Glycerindisulfats.

Die anionischen Tenside werden vorzugsweise als Natriumsalze eingesetzt, können aber auch als andere Alkali- oder Erdalkalimetallsalze, beispielsweise Kalium- oder Magnesiumsalze, sowie in Form von Ammonium- oder Mono-, Di-, Tri- bzw. Tetraalkylammoniumsalzen enthalten sein, im Falle der Sulfonate auch in Form ihrer korrespondierenden Säure, z.B. Dodecylbenzolsulfonsäure.

Geeignete Amphotenside sind beispielsweise Betaine der Formel (Rⁱⁱⁱ)(R^{iv})(R^{v})N⁺CH₂COO⁻, in der Rⁱⁱⁱ einen gegebenenfalls durch Heteroatome oder Heteroatomgruppen unterbrochenen Alkylrest mit 8 bis 25, vorzugsweise 10 bis 21 Kohlenstoffatomen und R^{iv} sowie R^{v} gleichartige oder verschiedene Alkylreste mit 1 bis 3 Kohlenstoffatomen bedeuten, insbesondere C₁₀-C₁₈-Alkyl-dimethylcarboxymethylbetain und C₁₁-C₁₇-Alkylamidopropyl-dimethylcarboxymethylbetain.

Als zwitterionische Tenside können beispielsweise Aminoxide eingesetzt werden.

Geeignete Kationtenside sind u.a. die quartären Ammoniumverbindungen der Formel (R^{vi})(R^{vii})(R^{viii})(R^{ix})N⁺ X⁻, in der R^{vi} bis R^{ix} für vier gleich- oder verschiedenartige, insbesondere zwei lang- und zwei kurzkettige, Alkylreste und X⁻ für ein Anion, insbesondere ein Halogenidion, stehen, beispielsweise Didecyl-dimethyl-ammoniumchlorid, Alkyl-benzyl-didecyl-ammoniumchlorid und deren Mischungen. Weitere geeignete kationische Tenside sind die quaternären oberflächenaktiven Verbindungen, insbesondere mit einer Sulfonium-, Phosphonium-, Jodonium- oder Arsoniumgruppe, die auch als antimikrobielle Wirkstoffe bekannt sind. Durch den Einsatz von quaternären oberflächenaktiven Verbindungen mit antimikrobieller Wirkung kann das Mittel mit einer antimikrobiellen Wirkung ausgestaltet werden bzw. dessen gegebenenfalls aufgrund anderer Inhaltsstoffe bereits vorhandene antimikrobielle Wirkung verbessert werden.

In verschiedenen Ausführungsformen kann das erfindungsgemäße Mittel neben dem optional enthaltenen Enzyminhibitor (A-I) weitere Enzymstabilisatoren und -Inhibitoren enthalten. Die im Folgenden genannten Stabilisatoren und Inhibitoren können insbesondere dann zum Einsatz kommen, wenn die Mittel Proteasen enthalten und sind dann vorzugsweise in derselben Zusammensetzung enthalten, die auch die Protease enthält.

Weitere etablierte Enzymstabilisatoren sind Aminoalkohole wie Mono-, Di-, Triethanol- und -propanolamin und deren Mischungen, aliphatische Carbonsäuren bis zu C₁₂, wie beispielsweise Bernsteinsäure, andere Dicarbonsäuren oder Salze der genannten Säuren. Auch endgruppenverschlossene Fettsäureamidalkoxylate sind für diesen Zweck etabliert.

Als Enzymstabilisatoren geeignet sind beispielsweise auch wasserlösliche Calciumsalze, wie Calciumchlorid (CaCl₂), Calciumlactat oder Calciumacetat sowie andere Salze von Calcium mit alpha-Hydroxycarbonsäuren oder alpha-Aminosäuren. Weiterhin geeignet sind organische (Metall-)Salze wie Formiate und Acetate.

Bevorzugte Boronsäureverbindungen sind Phenylboronsäure-Derivate, insbesondere das Phenylboronsäure-Derivat 4-Formyl-phenyl-boronsäure (4-FPBA). Weitere bevorzugte Phenylboronsäure-Derivate können ferner weitere chemische Modifikationen am Phenylring aufweisen, insbesondere können sie einen oder mehrere Methyl-, Amino-, Nitro-, Chloro-, Fluoro-, Bromo,-Hydroxyl-, Formyl-, Ethyl-, Acetyl-, t-Butyl-, Anisyl-, Benzyl-, Trifluroacetyl-, N-hydroxysuccinimid-, t-Butyloxycarbonyl-, Benzoyl-, 4-Methylbenzyl-, Thioanizyl-, Thiocresyl-, Benzyloxymethyl-, 4-Nitrophenyl-, Benzyloxycarbonyl-, 2-Nitrobenzoyl-, 2-Nitrophenylsulphenyl-, 4-Toluenesulphonyl-, Pentafluorophenyl-, Diphenylmethyl-, 2-Chlorobenzyloxycarbonyl-, 2,4,5-trichlorophenyl-, 2-bromobenzyloxycarbonyl-, 9-Fluorenylmethyloxycarbonyl-, Triphenylmethyl-, 2,2,5,7,8-pentamethyl-chroman-6-sulphonyl-Reste bzw. Gruppen oder Kombinationen hiervon enthalten. Generell erfasst der Begriff "Boronsäuren", wie hierin verwendet, alle Verbindungen der Formel R-B(OH)₂, in denen R ein organischer Rest ist, sowie Salze und Ester davon, in denen ein oder beide Wasserstoffatome durch Kationen oder einen organischen Rest ersetzt sind.

In verschiedenen Ausführungsformen können als Enzymstabilisatoren weiterhin die Verbindungen der allgemeinen Strukturformel

Z-A-(A)ₙ-NH-CH(R)-Y (I)

eingesetzt werden, wobei A ein Aminosäurerest ist (bevorzugte Aminosäurereste A sind ausgewählt aus Ala, Gly, Val, Ile, Leu, Phe, Lys); Y -C(O)-X oder CHOH-SO₃B ist, B Wasserstoff oder ein geeignetes Kation, insbesondere (Alkali)metallkation ist, X Wasserstoff oder CF₃ ist; Z ein N-Verkappungsrest ausgewählt aus Phosphoramidat [(R'O)₂(O)P-], Sulfenamid [(SR')₂-], Sulfonamid [(R'(O)₂S-], Sulfonsäure [SO₃H], Phosphinamid [(R')₂(O)P-], Sulfamoyl Derivaten [R'O(O)₂S-], Thioharnstoff [(R')₂N(O)C-], Thiocarbamat [R'O(S)C-], Phosphonat [R'-P(O)OH], Amidophosphat [R'O(OH)(O)P-], Carbamat (R'O(O)C-) und Harnstoff (R'NH(O)C-) ist, wobei jedes R' unabhängig ausgewählt wird aus geradkettigen oder verzweigten C1-C6 unsubstituierten Alkyl-, Phenyl-, C7-C9 Alkylaryl- und Cycloalkyl-Resten, wobei der Cycloalkylring ein C4-C8 Cycloalkylring sein kann und ein oder mehrere Heteroatome enthalten kann, die ausgewählt werden aus O, N, und S; R ausgewählt wird aus geradkettigen oder verzweigten C1-C6 unsubstituierten Alkyl-, Phenyl und C7-C9 Alkylarylresten, insbesondere -CH₂-Phenyl oder -CH₂-(4-Hydroxyphenyl); und n 0, 1 oder 2, vorzugsweise 0 oder 1 ist, wobei wenn n nicht 0 ist, die Aminosäuren über eine Peptidbindung verknüpft sind.

Bevorzugte Reste R werden ausgewählt aus Methyl, iso-Propyl, sec-Butyl, iso-Butyl, -C₆H₅, -CH₂-C₆H₅, -CH₂-C₆H₄OH (insbesondere CH₂-(4-Hydroxyphenyl), und -CH₂-CH₂-C₆H₅, so dass der Teil -NH-CH(R)-Y der Verbindung der Formel (I) von den Aminosäuren Ala, Val, Ile, Leu, Tyr, PGly (Phenylglycin), Phe und HPhe (Homophenylalanine) abgeleitet ist, indem die Carboxylgruppe in eine Aldehyd- oder Trifluoromethylketongruppe bzw. ein Aldehyd-Hydrogensulfit-Addukt umgewandelt wird. Obwohl solche Reste daher keine Aminosäuren sind (obwohl sie aus einem Aminosäurevorläufer synthetisiert sein können), wird hierin bei den beispielhaft aufgelisteten Enzymstabilisatoren der Einfachheit halber der Aldehydteil der Inhibitoren, der von der entsprechenden Aminosäuren abgeleitet ist, durch den Zusatz "H" nach der analogen Aminosäure bezeichnet (z.B., steht "-AlaH" für den Rest "-NHCH(CH₃)C(O)H"). Trifluoromethylketone werden in gleicher Weise durch den Zusatz "CF₃" nach der analogen Aminosäure gekennzeichnet (z.B., steht "-AlaCF₃" für den Rest "-NHCH(CH₃)C(O)CF₃"). Schließlich werden die Hydrogensulfit-Addukte von Aldehyden durch den Zusatz "SO₃H" oder "SO₃Na" nach der analogen Aminosäure bezeichnet (z.B., steht "-TyrSO₃H" für den Rest "-NHCH(CH₂C₆H₄OH)CHOH-SO₃H").

Derartige Aldehyde können aus den entsprechenden Aminosäuren hergestellt werden, wobei die C-terminale Carboxylgruppe der Aminosäure in eine Aldehydgruppe umgewandelt wird. Derartige Aldehyde können mittels bekannter Verfahren hergestellt werden, wie z.B. in U.S. Pat. Nr. 5015627, EP 0 185 930, EP 0 583 534 und DE 3200812 beschrieben.

Die Trifluoromethylketone können ebenfalls aus den korrespondierenden Aminosäuren hergestellt werden, indem die C-terminal Carboxylgruppe in eine Trifluoromethylketongruppe umgewandelt wird. Solche Trifluoromethylketone können mittels bekannter Verfahren, wie beispielsweise in der EP 0 583 535 beschrieben, hergestellt werden.

Das N-terminale Ende der Enzymstabilisatoren wird durch eine Schutzgruppe, die den N-Terminus verkappt geschützt, wobei die Gruppe ausgewählt wird aus Carbamaten, Harnstoffen, Sulfonamiden, Phosphonamiden, Thioharnstoffen, Sulfenamiden, Sulfonsäuren, Phosphinamiden, Thiocarbamaten, Amidophosphaten und Phosphonamiden. In einer bevorzugten Ausführungsform wird das N-terminale Ende jedoch durch eine Methyl-, Ethyl- oder Benzylcarbamatgruppe [CH₃O-(O)C-; CH₃CH₂O-(O)C-; oder C₆H₅CH₂O-(O)C-], eine Methyl-, Ethyl- oder Benzylharnstoffgruppe [CH₃NH-(O)C-; CH₃CH₂NH-(O)C-; or C₆H₅CH₂NH-(O)C-], eine Methyl-, Ethyl- oder Benzylsulfonamidgruppe [CH₃SO₂-; CH₃CH₂SO₂-; or C₆H₅CH₂SO₂-], oder eine Methyl-, Ethyl oder Benzylamidophosphatgruppe [CH₃O(OH)(O)P-; CH₃CH₂O(OH)(O)P-; or C₆H₅CH₂O(OH)(O)P-] geschützt.

Die Synthese der N-Verkappungsgruppen kann beispielsweise den folgenden Dokumenten entnommen werden: Protective Groups in Organic Chemistry, Greene, T., Wuts, P., John Wiley & Sons, New York, 1991, pp 309-405; March, J, Advanced Organic Chemistry, Wiley Interscience, 1985, pp. 445, 469, Carey, F. Sundberg, R., Advanced Organic Chemistry, Part B, Plenum Press, New York, 1990, pp. 686-89; Atherton, E., Sheppard, R., Solid Phase Peptide Synthesis, Pierce Chemical, 1989, pp. 3-4; Grant, G., Synthetic Peptides, W. H. Freeman & Co. 1992, pp. 77-103; Stewart, J., Young, J., Solid Phase Peptide Synthesis, 2nd Edition, IRL Press, 1984, pp. 3,5,11,14-18, 28-29. Bodansky, M., Principles of Peptide Synthesis, Springer-Verlag, 1988, pp. 62, 203, 59-69; Bodansky, M., Peptide Chemistry, Springer-Verlag, 1988, pp. 74-81, Bodansky, M., Bodansky,A., The Practice of Peptide Synthesis, Springer-Verlag, 1984, pp. 9-32.

Beispielhafte Enzymstabilisatoren, die erfindungsgemäß eingesetzt werden können, umfassen, sind aber nicht beschränkt auf: CH₃O-(O)C-Leu-LeuH; CH₃O-(O)C-Ala-LeuH; CH₃CH₂O-(O)C-Ala-LeuH; C₆H₅CH₂O-(O)C-Ala-LeuH; CH₃O-(O)C-Ala-LeuCF₃; CH₃CH₂O-(O)C-Ala-LeuCF₃; C₆H₅CH₂O-(O)C-Ala-LeuCF₃; CH₃O-(O)C-Ala-IleH; CH₃CH₂O-(O)C-Ala-IleH; C₆H₅CH2O-(O)C-Ala-IleH; CH₃O-(O)C-Ala-IleCF₃; CH₃CH₂O-(O)C-Ala-IleCF₃; C₆H₅CH₂O-(O)C-Ala-IleCF₃; CH₃O-(O)C-Gly-LeuH; CH₃CH₂O-(O)C-Gly-LeuH; C₆H₅CH₂O-(O)C-Gly-LeuH; CH₃O-(O)C-Gly-LeuCF₃ ; CH₃CH₂O-(O)C-Gly-LeuCF₃; C₆H₅CH₂O-(O)C-Gly-LeuCF₃; CH₃O-(O)C-Gly-IleH; CH₃CH₂O-(O)C-Gly-IleH; C₆H₅CH₂O-(O)C-Gly-IleH; CH₃O-(O)C-Gly-IleCF₃; CH₃CH₂O-(O)C-Gly-IleCF₃; C₆H₅CH₂O-(O)C-Gly-IleCF₃; CH₃NH-(O)C-Ala-LeuH; CH₃CH₂NH-(O)C-Ala-LeuH; C₆H₅CH₂NH-(O)C-Ala-LeuH; CH₃NH-(O)C-Ala-LeuCF₃; CH₃CH₂NH-(O)C-Ala-LeuCF₃; C₆H₅CH₂NH-(O)C-Ala-LeuCF₃; CH₃NH-(O)C-Ala-IleH; CH₃CH₂NH-(O)C-Ala-IleH; C₆H₅CH₂NH-(O)C-Ala-IleH; CH₃NH-(O)C-Ala-IleCF₃; CH₃CH₂NH-(O)C-Ala-IleCF₃; C₆H₅CH₂NH-(O)C-Ala-IleCF₃; CH₃NH-(O)C-Gly-LeuH; CH₃CH₂NH-(O)C-Gly-LeuH; C₆H₅CH₂NH-(O)C-Gly-LeuH; CH₃NH-(O)C-Gly-LeuCF₃; CH₃CH₂NH-(O)C-Gly-LeuCF₃; C₆H₅CH₂NH-(O)C-Gly-LeuCF₃; CH₃NH-(O)C-Gly-IleH; CH₃CH₂NH-(O)C-Gly-IleH; C₆H₅CH₂NH-(O)C-Gly-IleH; CH₃NH-(O)C-Gly-IleCF₃; CH₃CH₂NH-(O)C-Gly-IleCF₃; C₆H₅CH₂NH-(O)C-Gly-IleCF₃; CH₃SO₂-Ala-LeuH; CH₃CH₂SO₂-Ala-LeuH; C₆H₅CH₂SO₂-Ala-LeuH; CH₃SO₂-Ala-LeuCF₃; CH₃CH₂SO₂-Ala-LeuCF₃; C₆H₅CH₂S₂-Ala-LeuCF₃; CH₃SO₂-Ala-IleH; CH₃CH₂SO₂-Ala-IleH; C₆H₅CH₂SO₂-Ala-IleH; CH₃SO₂-Ala-IleCF₃; CH₃CH₂SO₂-Ala-IleCF₃; C₆H₅CH₂SO₂-Ala-IleCF₃; CH₃SO₂-Gly-LeuH; CH₃CH₂SO₂-Gly-LeuH; C₆H₅CH₂SO₂-Gly-LeuH; CH₃SO₂-Gly-LeuCF₃; CH₃CH₂SO₂-Gly-LeuCF₃; C₆H₅CH₂SO₂-Gly-LeuCF₃; CH₃SO₂-Gly-IleH; CH₃CH₂SO₂-Gly-IleH; C₆H₅CH₂SO₂-Gly-IleH; CH₃SO₂-Gly-IleCF₃; CH₃CH₂SO₂-Gly-IleCF₃; C₆H₅CH₂SO₂-Gly-IleCF₃; CH₃O(OH)(O)P-Ala-LeuH; CH₃CH₂O(OH)(O)P-Ala-LeuH; C₆H₅CH₂O(OH)(O)P-Ala-LeuH; CH₃O(OH)(O)P-Ala-LeuCF₃; CH₃CH₂O(OH)(O)P-Ala-LeuCF₃; C₆H₅CH₂O(OH)(O)P-Ala-LeuCF₃; CH₃O(OH)(O)P-Ala-IleH; CH₃CH₂O(OH)(O)P-Ala-IleH; C₆H₅CH₂O(OH)(O)P-Ala-IleH; CH₃O(OH)(O)P-Ala-IleCF₃; CH₃CH₂O(OH)(O)P-Ala-IleCF₃; C₆H₅CH₂O(OH)(O)P-Ala-IleCF₃; CH₃O(OH)(O)P-Gly-LeuH; CH₃CH₂O(OH)(O)P-Gly-LeuH; C₆H₅CH₂O(OH)(O)P-Gly-LeuH; CH₃O(OH)(O)P-Gly-LeuCF₃; CH₃CH₂O(OH)(O)P-Gly-LeuCF₃; C₆H₅CH₂O(OH)(O)P-Gly-LeuCF₃; CH₃O(OH)(O)P-Gly-IleH; CH₃CH₂O(OH)(O)P-Gly-IleH; C₆H₅CH₂O(OH)(O)P-Gly-IleH; CH₃O(OH)(O)P-Gly-IleCF₃; CH₃CH₂O(OH)(O)P-Gly-IleCF₃; C₆H₅CH₂O(OH)(O)P-Gly-IleCF₃; CH₃O-(O)C-Val-Ala-LeuSO₃Na; C₆H₅CH₂O-(O)C-Gly-Ala-TyrH; C₆H₅CH₂O-(O)C-Gly-Ala-TyrSO₃H; C₆H₅CH₂O-(O)C-Gly-Ala-TyrSO₃Na; C₆H₅O-(O)C-Gly-Ala-TyrSO₃H; und C₆H₅O-(O)C-Gly-Ala-TyrSO₃Na. In den vorstehenden Verbindungen wird die oben beschriebene Terminologie zur Kenntlichmachung der Aldehyd- bzw. Trifluoromethylketongruppen verwenden.

In verschiedenen Ausführungsformen umfasst die Erfindung auch alle Stereoisomere, insbesondere Enantiomere und Diastereomere, Tautomere und Salze der vorstehend beschriebenen Verbindungen.

Generell können die als Stabilisatoren eingesetzten Peptidderivate und Peptidaddukte aus denen ausgewählt werden, die in den Patentveröffentlichungen WO 2013/004636 A1, WO 2014/173980 A2, WO 2013/004635 A1, WO2014/124927 A3, WO2009/118375 A2, US 6,165,966 A und US2011/0039752 A1 beschrieben werden.

In verschiedenen Ausführungsformen ist das erfindungsgemäße Mittel phosphatfrei. "Phosphatfrei" und "phosphonatfrei", wie hierin verwendet, bedeutet, dass die betreffende Zusammensetzung im Wesentlichen frei von Phosphaten bzw. Phosphonaten ist, d.h. insbesondere Phosphate bzw. Phosphonate in Mengen kleiner als 0,1 Gew.-%, vorzugsweise kleiner als 0,01 Gew.-%, bezogen auf die jeweilige Zusammensetzung, enthält.

Weitere vorteilhafte Inhaltsstoffe erfindungsgemäßer Mittel sind beispielsweise auch offenbart in der internationalen Patentanmeldung WO2009/121725, dort beginnend auf Seite 5, vorletzter Absatz, und endend auf Seite 13 nach dem zweiten Absatz. Auf diese Offenbarung wird ausdrücklich Bezug genommen und der dortige Offenbarungsgehalt in die vorliegende Patentanmeldung einbezogen.

Generell kann der pH-Wert der Zusammensetzungen mittels üblicher pH-Regulatoren eingestellt werden. In verschiedenen Ausführungsformen liegt der pH-Wert der Zusammensetzung A in einem Bereich von 5,5 bis 8,5, vorzugsweise 6,5 bis 8,0, besonders bevorzugt von 7,0 bis 7,5, insbesondere bei ungefähr 7,5, und der pH-Wert der Zusammensetzung B liegt in einem Bereich von 7,0 bis 12, vorzugsweise 8,0 bis 11,5, bevorzugt größer als 8, insbesondere 8,5 bis 11,5. Als pH-Stellmittel dienen Säuren und/oder Alkalien, vorzugsweise Alkalien. Geeignete Säuren sind insbesondere organische Säuren wie die Essigsäure, Zitronensäure, Glycolsäure, Milchsäure, Bernsteinsäure, Adipinsäure, Äpfelsäure, Weinsäure und Gluconsäure oder auch Amidosulfonsäure. Daneben können aber auch die Mineralsäuren Salzsäure, Schwefelsäure und Salpetersäure bzw. deren Mischungen eingesetzt werden. Geeignete Basen stammen aus der Gruppe der Alkali- und Erdalkalimetallhydroxide und -carbonate, insbesondere der Alkalimetallhydroxide, von denen Kaliumhydroxid bevorzugt ist. Bsonders bevorzugt wird zur Einstellung des pH-Werts die oben beschriebene Alkaliquelle verwendet. Auch wenn flüchtiges Alkali, beispielsweise in Form von Ammoniak und/oder Alkanolaminen, die bis zu 9 C-Atome im Molekül enthalten können, zur Einstellung des pH-Werts verwendet werden können, wobei das Alkanolamin ist hierbei ausgewählt werden kann aus der Gruppe bestehend aus Mono-, Di-, Triethanol- und -Propanolamin und deren Mischungen, wird vorzugsweise auf solche flüchtigen Alkaliquellen, insbesondere Ethanolamine verzichtet. In verschiedenen Ausführungsformen enthalten die Zusammensetzungen daher weniger als 1,75 Gew.-% Alkanolamin, insbesondere Monoethanolamin, ganz besonders bevorzugt sind sie frei davon. Es wurde gefunden, dass das Weglassen solcher Alkanolamine, die Stabilität der Mittel erhöht.

"Ungefähr", wie hierin im Zusammenhang mit einem Zahlenwert verwendet, bedeutet der Zahlenwert ±5%. "Ungefähr 7,5", bedeutet daher 7,125 bis 7,875.

Zur Einstellung und/oder Stabilisierung des pH-Werts kann das erfindungsgemäße Mittel ein oder mehrere Puffersubstanzen (INCI Buffering Agents) enthalten, üblicherweise in Mengen von 0,001 bis 5 Gew.-%. Bevorzugt sind Puffersubstanzen, die zugleich Komplexbildner oder sogar Chelatbildner (Chelatoren, INCI Chelating Agents) sind. Besonders bevorzugte Puffersubstanzen sind die Citronensäure bzw. die Citrate, insbesondere die Natrium- und Kaliumcitrate, beispielsweise Trinatriumcitrat·2H₂O und Trikaliumcitrat·H₂O.

Die Konfektionierung hierin beschriebener Mittel kann in unterschiedlicher Wiese erfolgen. Die flüssigen Angebotsformen auf Basis von Wasser und/oder organischen Lösungsmitteln können verdickt, in Form von Gelen vorliegen.

In verschiedenen Ausführungsformen besitzt das Mittel bzw. die jeweilige flüssige Zusammensetzung direkt nach der Herstellung eine Viskosität oberhalb 200 mPas (Brookfield Viscometer DV-II+Pro, Spindel 25, 30 rpm, 20°C), insbesondere zwischen 400 und 6000 mPas.

Die hierin beschriebenen Wasch- und Reinigungsmittel werden vorzugsweise zu Dosiereinheiten vorkonfektioniert. Diese Dosiereinheiten umfassen vorzugsweise die für einen Reinigungsgang notwendige Menge an wasch- oder reinigungsaktiven Substanzen. Bevorzugte Dosiereinheiten weisen ein Gewicht zwischen 12 und 30 g auf. Das Volumen der vorgenannten Dosiereinheiten sowie deren Raumform sind mit besonderem Vorzug so gewählt, dass eine Dosierbarkeit der vorkonfektionierten Einheiten über die Dosierkammer einer Wasch- oder Geschirrspülmaschine gewährleistet ist. Das Volumen der Dosiereinheit beträgt daher bevorzugt zwischen 10 und 35 ml, vorzugsweise zwischen 12 und 30 ml.

Die Wasch- und Reinigungsmittel, insbesondere die vorgefertigten Dosiereinheiten, weisen mit besonderem Vorzug eine wasserlösliche Umhüllung auf.

Die wasserlösliche Umhüllung wird vorzugsweise aus einem wasserlöslichen Folienmaterial, welches ausgewählt ist aus der Gruppe, bestehend aus Polymeren oder Polymergemischen, gebildet. Die Umhüllung kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein. Besonders bevorzugt sind Folien, die beispielsweise zu Verpackungen wie Schläuchen oder Kissen verklebt und/oder versiegelt werden können, nachdem sie mit einem Mittel befüllt wurden. In verschiedenen Ausführungsformen haben die Folien die Form von Mehrkammerpouches, wobei die Zusammensetzungen A und B räumlich getrennt in verschiedenen Kammern eines Pouches aus einer wasserlöslichen Folie vorliegen.

Es ist bevorzugt, dass die wasserlösliche Umhüllung Polyvinylalkohol oder ein Polyvinylalkoholcopolymer enthält. Wasserlösliche Umhüllungen, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Geeignete wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Umhüllung einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung der wasserlöslichen Umhüllung geeignetem Polyvinylalkohol-enthaltendem Folienmaterial kann zusätzlich ein Polymer ausgewählt aus der Gruppe umfassend (Meth)Acrylsäure-haltige (Co)Polymere, Polyacrylamide, Oxazolin-Polymere, Polystyrolsulfonate, Polyurethane, Polyester, Polyether, Polymilchsäure oder Mischungen der vorstehenden Polymere zugesetzt sein. Ein bevorzugtes zusätzliches Polymer sind Polymilchsäuren.

Bevorzugte Polyvinylalkoholcopolymere umfassen neben Vinylalkohol Dicarbonsäuren als weitere Monomere. Geeignete Dicarbonsäuren sind Itaconsäure, Malonsäure, Bernsteinsäure und Mischungen daraus, wobei Itaconsäure bevorzugt ist.

Ebenfalls bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Es kann bevorzugt sein, dass das Folienmaterial weitere Zusatzstoffe enthält. Das Folienmaterial kann beispielsweise Weichmacher wie Dipropylenglycol, Ethylenglycol, Diethylenglycol, Propylenglycol, Glycerin, Sorbitol, Mannitol oder Mischungen daraus enthalten. Weitere Zusatzstoffe umfassen beispielsweise Freisetzungshilfen, Füllmittel, Vernetzungsmittel, Tenside, Antioxidationsmittel, UV-Absorber, Antiblockmittel, Antiklebemittel oder Mischungen daraus.

Geeignete wasserlösliche Folien zum Einsatz in den wasserlöslichen Umhüllungen der wasserlöslichen Verpackungen gemäß der Erfindung sind Folien, die von der Firma MonoSol LLC beispielsweise unter der Bezeichnung M8630, C8400 oder M8900 vertrieben werden. Andere geeignete Folien umfassen Folien mit der Bezeichnung Solublon® PT, Solublon® GA, Solublon® KC oder Solublon® KL von der Aicello Chemical Europe GmbH oder die Folien VF-HP von Kuraray.

Die entsprechende Verwendung der erfindungsgemäßen Mittel ist ebenfalls Gegenstand der Erfindung.

Ein weiterer Erfindungsgegenstand ist ein Verfahren zur Reinigung von Textilien oder harten Oberflächen, das dadurch gekennzeichnet ist, dass in mindestens einem Verfahrensschritt ein erfindungsgemäßes Mittel angewendet wird. Gegenstand der vorliegenden Anmeldung ist somit insbesondere auch ein Verfahren zum Waschen von Textilien in einer automatischen Waschmaschine oder zur Reinigung von Geschirr in einer Geschirrspülmaschine, bei welchem das erfindungsgemäße Mittel während des Durchlaufens eines Wasch- oder Geschirrspülprogramms vor Beginn des Hauptspülgangs oder im Verlaufe des Hauptspülgangs in den Innenraum einer Wasch- oder Geschirrspülmaschine eindosiert wird. Die Eindosierung bzw. der Eintrag des erfindungsgemäßen Mittels in den Innenraum der Wasch- oder Geschirrspülmaschine kann manuell erfolgen, alternativ kann das Mittel mittels der Dosierkammer in den Innenraum der Wasch- oder Geschirrspülmaschine dosiert werden.

In verschieden Ausführungsformen zeichnen sich die oben beschriebene Verfahren dadurch aus, dass die Protease bei einer Temperatur von 0-100°C, bevorzugt 0-60°C, weiter bevorzugt 20-40°C und am meisten bevorzugt bei 20°C eingesetzt wird.

Hierunter fallen sowohl manuelle als auch maschinelle Verfahren, wobei maschinelle Verfahren bevorzugt sind. Verfahren zur Reinigung von Textilien zeichnen sich im Allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einem Waschmittel oder einer Lösung oder Verdünnung dieses Mittels behandelt wird. Entsprechendes gilt für Verfahren zur Reinigung von allen anderen Materialien als Textilien, insbesondere von harten Oberflächen. Alle denkbaren Wasch- oder Reinigungsverfahren können in wenigstens einem der Verfahrensschritte um die Anwendung eines erfindungsgemäßen Wasch- oder Reinigungsmittels bereichert werden und stellen dann Ausführungsformen der vorliegenden Erfindung dar. Alle Sachverhalte, Gegenstände und Ausführungsformen, die für erfindungsgemäßen Mittel beschrieben sind, sind auch auf diesen Erfindungsgegenstand anwendbar. Daher wird an dieser Stelle ausdrücklich auf die Offenbarung an entsprechender Stelle verwiesen mit dem Hinweis, dass diese Offenbarung auch für die vorstehenden erfindungsgemäßen Verfahren gilt.

Alle Sachverhalte, Gegenstände und Ausführungsformen, die für die erfindungsgemäßen Mittel beschrieben sind, sind auch auf diesen Erfindungsgegenstand anwendbar. Daher wird an dieser Stelle ausdrücklich auf die Offenbarung an entsprechender Stelle verwiesen mit dem Hinweis, dass diese Offenbarung auch für die vorstehenden erfindungsgemäßen Verwendungen und Verfahren gilt.

### Beispiele

### Rezepturen

Im Folgenden sind erfindungsgemäße Mittel aufgeführt. Diese Mittel wurden als Wasch- und Reinigungsmittel-Portionen in einem wasserlöslichen Film verpackt.

In Tabelle 1 gibt bespielhaft erfindungsgemäße Mittel E1 bis E4 an, die in 2-Kammer-Pouches aus wasserlöslichem Polyvinylalkoholfilm verpackt wurden (Angaben in Gew.-% bezogen auf den jeweiligen Kammerinhalt).

**Tabelle 1:**

| **Mittel** | **E1** | **E2** | **E3** | **E4** |
|---|---|---|---|---|
| **Kammer 1 (15g)** | | | | |
| C₉₋₁₃-Alkylbenzolsulfonsäure | 21 | 21 | 21 | 21 |
| C₁₃₋₁₅-Alkohol mit 8 EO | 22,5 | 22,5 | 22,5 | 18,5 |
| C₁₂₋₁₈-Fettsäure | 17,5 | 17,5 | 17,5 | 17,5 |
| Glycerin | 11 | 12 | 10 | 11 |
| Phosphonsäure, Na-Salz | 0,3 | 0,3 | 0,3 | 0,3 |
| 1,2-Propandiol | 13,5 | 13,5 | 10,5 | 10,5 |
| Ethanol | 3,26 | 3,26 | 3,26 | 3,26 |
| Monoethanolamin (MEA) | 6,4 | 6,4 | 6,4 | 6,4 |
| NADP | + | + | + | + |
| β-Lapachone | 2 | 1 | 4 | 2 |
| Glucosedehydrogenase (GDH) | + | + | + | + |
| Enzyme (Amylase, Protease, Cellulasen, Mannanase, Pectatlyase, Lipase) | + | + | + | + |
| Farbstoff | + | + | + | + |
| Soil-Release Polymer^{c)} | - | - | 2 | - |
| Parfüm | + | + | + | + |
| Optischer Aufheller | 0,3 | 0,3 | 0,3 | 0,3 |
| Polyethylenimin, ethoxyliert (Sokalan® HP 20) | - | - | - | 5 |
| Wasser | 1,74 | 1,74 | 1,74 | 1,74 |

| **Kammer 2 (10g)** | | | | |
|---|---|---|---|---|
| C₉₋₁₃-Alkylbenzolsulfonsäure | 21 | 21 | 21 | 21 |
| C₁₃₋₁₅-Alkohol mit 8 EO | 22,5 | 22,5 | 22,5 | 22,5 |
| C₁₂₋₁₈-Fettsäure | 17,5 | 17,5 | 17,5 | 17,5 |
| Glycerin | 9 | 9 | 10 | 12 |
| Phosphonsäure, Na-Salz | 0,3 | 0,3 | 0,3 | 0,3 |
| 1,2-Propandiol | 11,5 | 12,5 | 12,5 | 13,5 |
| Ethanol | 3,26 | 3,26 | 3,26 | 3,26 |
| MEA | 6,4 | 6,4 | 6,4 | 6,4 |
| Enzym (A) | + | + | + | + |
| Glucose | 6 | 5 | 4 | 1 |
| Dicoumarol | + | - | + | - |
| Enzyme (Amylase, Mannanase, Pectatlyase, Lipase) | - | - | - | - |
| Farbstoff | + | + | + | + |
| Soil-Release-Polymer^{c)} | - | - | - | - |
| Parfüm | + | + | + | + |
| Optischer Aufheller | 0,3 | 0,3 | 0,3 | 0,3 |
| Sokalan HP 20 | - | - | - | - |
| Wasser | 1,74 | 1,74 | 1,74 | 1,74 |

| | | | | |
|---|---|---|---|---|
| c) Texcare ® SRN 170, Clariant | | | | |

## Patentansprüche

1. Wasch- oder Reinigungsmittel, **dadurch gekennzeichnet, dass** das Mittel enthält:
(A) mindestens eine Chinon-Oxidoreduktase,
(B) NAD(P)H als Cofaktor; und
(C) mindestens ein Substrat (C) für das Enzym (A),
wobei die Komponente (A) räumlich getrennt von den Komponenten (B) und (C) vorliegt und/oder das Mittel des Weiteren mindestens eine Substanz (A-I) umfasst, welche als Inhibitor für das Enzym (A) fungiert.

2. Wasch- oder Reinigungsmittel nach Anspruch 1, **dadurch gekennzeichnet, dass** das Mittel des Weiteren mindestens ein Enzym (D) enthält, welches für die Regeneration des Cofaktors (B) geeignet ist, sowie mindestens ein Substrat (E) für das Enzym (D) umfasst.

3. Wasch- oder Reinigungsmittel nach Anspruch 1 oder 2, **dadurch gekennzeichnet, dass** das Mittel
a) die Komponente (A) in einer Menge von 0,00001 bis 10 Gew.-%, vorzugsweise in einer Menge von 0,0002 bis 0,8 Gew.-%, jeweils bezogen auf das Gesamtgewicht des Mittels, enthält; und/oder
b) die Komponente (B) in einer Menge von 0,001 bis 2 Gew.-%, vorzugsweise in einer Menge von 0,1 bis 0,5 Gew.-%, jeweils bezogen auf das Gesamtgewicht des Mittels, enthält; und/oder
c) die Komponente (C) in einer Menge von 0,1 bis 10 Gew.-%, vorzugsweise in einer Menge von 0,1 bis 6 Gew.-%, jeweils bezogen auf das Gesamtgewicht des Mittels, enthält; und/oder
d) die Komponente (D) in einer Menge von 0,00001 bis 10 Gew.-%, vorzugsweise in einer Menge von 0,0002 bis 0,8 Gew.-%, jeweils bezogen auf das Gesamtgewicht des Mittels, enthält; und/oder
e) die Komponente (E) in einer Menge von 0,2 bis 10 Gew.-%, vorzugsweise in einer Menge von 0,1 bis 10 Gew.-%, jeweils bezogen auf das Gesamtgewicht des Mittels, enthält; und/oder
f) die Komponente (A-I) in einer Menge von 0,00001 bis 10 Gew.-%, vorzugsweise in einer Menge von 0,0002 bis 0,8 Gew.-%, jeweils bezogen auf das Gesamtgewicht des Mittels, enthält.

4. Wasch- oder Reinigungsmittel nach einem der Ansprüche 1 bis 3, **dadurch gekennzeichnet, dass** das Enzym (A) eine Aminosäuresequenz umfasst, die zu der in SEQ ID NO:1, SEQ ID NO:2 oder SEQ ID NO:3 angegebenen Aminosäuresequenz über deren Gesamtlänge zu mindestens 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 90,5%, 91%, 91,5%, 92%, 92,5%, 93%, 93,5%, 94%, 94,5%, 95%, 95,5%, 96%, 96,5%, 97%, 97,5%, 98%, 98,5%, 98,8%, 99,0%, 99,2%, 99,4% oder 99,6% identisch ist.

5. Wasch- oder Reinigungsmittel nach einem der Ansprüche 1 bis 4, **dadurch gekennzeichnet, dass** die Komponente (C) ausgewählt ist aus Chinonen, insbesondere β-Lapachon, Streptonigrin, Deoxynybochinon, Isobutyldeoxynybochinon, Mitomycin C, KP372-1, Phenothiazinium-Verbindungen, 2,5-Diaziridinyl-3-(hydroxymethyl)-6-methyl-1,4-benzochinon (RH1), Apazichinon (EO9), Indolchinonen, Pronoqodin A, Chinolinchinonen, Binaphtylchinonen, Anthrachinon, Plastochinon, Pyrrolochinolinchinon, Carbazilchinon, Chloranil, Dibromthymochinon, Plastochinon, Ubichinon, Indolchinonen, Porfiromycin, Pyrroliminochinonen, Atovaquon, Vitamin K, Vitamin K1, Vitamin K2 und Vitamin K3.

6. Wasch- oder Reinigungsmittel nach einem der Ansprüche 1 bis 5, **dadurch gekennzeichnet, dass** die Komponente (A-I) eine Verbindung aus der Klasse der 4-Hydroxycumarine ist, vorzugsweise ausgewählt aus Dicoumarol, Melatonin, Resveratrol und Chrysoeriol.

7. Wasch- oder Reinigungsmittel nach einem der Ansprüche 1 bis 6, **dadurch gekennzeichnet, dass** das Mittel in Form eines Mehrkammersystems vorliegt und sich die Komponente (A) in einer anderen Kammer des Mehrkammersystems befindet als die Komponenten (B) und (C).

8. Wasch- oder Reinigungsmittel nach einem der Ansprüche 2 bis 7, **dadurch gekennzeichnet, dass** das Mittel in Form eines Mehrkammersystems vorliegt und die Komponente (D) und die Komponente (E) in unterschiedlichen Kammern des Mehrkammersystems vorhanden sind.

9. Wasch- oder Reinigungsmittel nach einem der Ansprüche 2 bis 8, **dadurch gekennzeichnet, dass** die Komponente (D) Glucosedehydrogenase ist und die Komponente (E) Glucose ist.

10. Wasch- oder Reinigungsmittel nach einem der Ansprüche 1 bis 9, **dadurch gekennzeichnet, dass** das Mittel einen weiteren Bestandteil, vorzugsweise mindestens zwei weitere Bestandteile, ausgewählt aus der Gruppe bestehend aus Gerüststoffen, Tensiden, Polymeren, wassermischbaren Lösemitteln, pH-Regulatoren, weiteren Enzymen, weiteren Enzymstabilisatoren/-Inhibitoren, Bleichmitteln, Bleichkatalysatoren, Bleichaktivatoren, Schaumregulatoren, Farbstoffen, Duftstoffen und Parfümträgern enthält.

11. Wasch- oder Reinigungsmittel nach einem der Ansprüche 1 bis 10, **dadurch gekennzeichnet, dass** das Mittel
(a) flüssig ist; und/oder
(b) in Form einer Einheitsdosis, vorzugsweise umhüllt von einer wasserlöslichen Folie, vorliegt; und/oder
(c) phosphatfrei ist.

12. Verwendung des Wasch- oder Reinigungsmittels gemäß einem der Ansprüche 1 bis 11 zum Waschen von Textilien oder maschinellen Reinigen von Geschirr.

13. Verfahren zum Waschen von Textilien oder maschinellen Reinigen von Geschirr, **dadurch gekennzeichnet, dass** in mindestens einem Verfahrensschritt ein Wasch- oder Reinigungsmittel gemäß einem der Ansprüche 1 bis 11 angewendet wird.
